(19) Europäisches Patentamt
European Patent Office
Office européen des brevets

(11) Publication number: 0 339 559 A2

(12) # EUROPEAN PATENT APPLICATION

(21) Application number: 89107436.1

(22) Date of filing: 25.04.89

(51) Int. Cl.4: C08J 3/10, C08L 23/16, C08L 23/22

(30) Priority: 29.04.88 US 187961
05.04.89 US 332654

(43) Date of publication of application:
02.11.89 Bulletin 89/44

(84) Designated Contracting States:
BE CH DE FR GB IT LI NL

(71) Applicant: THE B.F. GOODRICH COMPANY
3925 Embassy Parkway
Akron Ohio 44313-1799(US)

(72) Inventor: Anderle, Gary A.
6216 Sommerset Drive
North Olmsted Ohio 44070(US)

(74) Representative: von Kreisler, Alek, Dipl.-Chem. et al
Patentanwälte Von Kreisler-Selting-Werner
Deichmannhaus am Hauptbahnhof
D-5000 Köln 1(DE)

(54) **Process for preparing elastomeric latex water emulsions and compositions thereof.**

(57) This invention relates to a process for preparing stable aqueous emulsions and/or dispersion of high molecular weight polymeric elastomers.

EP 0 339 559 A2

# PROCESS FOR PREPARING ELASTOMERIC LATEX WATER EMULSIONS AND COMPOSITIONS THEREOF

## BACKGROUND OF THE INVENTION

This application is a continuation-in-part of copending application Serial No. 187,961, filed April 29, 1988.

This invention relates to a process for preparing stable aqueous emulsions and/or dispersion of high molecular weight polymeric elastomers. It is generally known that the high molecular weight polymeric elastomers, such as polymers and copolymers of ethylene, propylene, butylene, and other unsaturated monomers, have many commercial applications, and particularly as coatings or binders for a variety of materials including binders for various fibrous materials such as asbestos, cellulose, paper, synthetic polymers, and the like.

More particularly, gasket materials used in internal combustion engines are subjected to prolonged exposure to hot oils and other hydrocarbon fluids and therefore, in addition to being able to resist aging under high temperatures and pressures, the materials should also possess adequate strength properties, such as compressibility, crush resistance, etc. Moreover, it is essential that the gaskets used in combustion engines swell when exposed to increased temperatures, e.g., hot oils, to improve the seal between the metal parts. Materials having these characteristics include the elastomeric-fibrous compositions which are particularly useful as head gaskets, rocker-housing gaskets, oil pan gaskets, cooling system gaskets, fuel pump gaskets, etc. The fibrous portion of the gasket imparts strength, while the elastomeric material provides the resiliency and conformability of the gasket to the metal parts. However, notwithstanding that many of these elastomeric materials exhibit some of the desired characteristics, none of the gasket materials presently available are satisfactory with respect to being resistant to oil degradation over prolonged periods of time at increased temperatures.

It has been found in accordance with this invention that unique gasket materials can be obtained by utilizing a fibrous material in combination with certain elastomeric polymers derived from latex emulsions or dispersions comprising terpolymers derived from ethylene and propylene or butyl rubber elastomers. Generally, the fibers comprise anywhere from 50 to 90 percent by weight of the gasket, with the elastomeric binder comprising from about 10 to 50 percent by weight of the gasket. It was found that gaskets prepared from the elastomeric latexes of this invention have improved high temperature resistance and excellent long-term hydrocarbon sealing capabilities, with little, if any, degradation.

In preparing gaskets, for example, it is generally known that in the beater addition method, the elastomeric material is added to the slurry of fibers in the form of a latex which may contain various other ingredients such as stabilizers, dispersants, curatives, and the like. After the fiber slurry is mixed with the latex, it is agitated and the latex coagulates by chemical and/or mechanical means and thereby is deposited upon the fibers. The coated fibers are then formed into sheets with conventional paper-making equipment such as the Fourdrinier wire or cylinder machine, etc.

In accordance with this invention, the preferred method comprises the continuous emulsification and semi-continuous stripping, which provides a process cycle shorter than batch emulsification, and with the addition of the rubber-extending oils to the cement, the polymer yield is improved substantially by preventing coagulum from forming at the end of the stripping cycle. In preparing ethylene-propylene-diene terpolymer latexes, for example, the polymer is characterized as having a low surface tension which requires an extremely low surface-tension surfactant in order to obtain wetting. However, the oil addition changes the surface tension of the latex particles and allows the surfactant to better adhere, which results in a more stable latex with a lower level of coagulum. Without the addition of the rubber-extending oils, coagulum would generate as the surface tension of the latex particle is reduced as the solvent is removed.

Moreover. it was found that the addition of the polymeric thickener not only aided in creaming the latex to form high solid emulsions, but also improved the product yield. Various creaming agents such as the alginates have been used, but some of these thickeners have a tendency to act as a protective colloid which inhibits the deposition of the latex onto the fibers. Further, the use of the thickener not only aids in creaming, but also keeps the high solid elastomers redispersable in the event the latex creams to a paste consistency. The addition of certain anionic phosphate esters to the emulsion acts as a surfactant and also imparts a degree of corrosion inhibition to the final product, which is particularly important where the latexes are used in the manufacture of gaskets and the like.

## SUMMARY OF THE INVENTION

This invention is directed to an elastomeric aqueous emulsion or dispersion and the process of preparing same which comprises a butyl rubber or a terpolymer derived from ethylene and propylene extended with oil and comprising at least one anionic phosphate ester and a polymeric thickener with one or more stabilizing agents, dispersants, surfactants, antifoam agents and the like.

Specifically, this invention relates to a continuous or batch process for preparing aqueous latex emulsions or dispersions which comprises forming a solution of an elastomer selected from the group consisting of butyl rubbers and polymers derived from ethylene, propylene, and an unsaturated monomer in an organic solvent, emulsifying the solution of elastomer with water in the presence of an effective amount of a rubber-extending oil and at least one phosphate ester to obtain an aqueous latex emulsion, followed by removing the organic solvent from said emulsion and thickening said aqueous emulsion with a thickening amount of at least one substantially water-soluble polymeric thickener selected from the group consisting of polyacrylics, polyvinyl alcohols, cellulosics, polyvinyl pyrrolidones, maleic acid/vinyl ether copolymers, natural gums, starches, and casein.

This invention particularly relates to a continuous process for preparing latex emulsions and dispersions from organic solutions of elastomers selected from the group consisting of butyl rubbers and polymers derived from ethylene, propylene and unsaturated monomers, wherein the improvement comprises emulsifying an organic solution of said elastomer with water in the presence of an effective amount of a rubber-extending oil and a phosphate ester, removing the organic solvent and thickening the emulsion with at least one substantially water-soluble polymeric thickener.

## DETAILED DESCRIPTION OF THE INVENTION

This invention relates to aqueous latex emulsions and/or dispersions and the process of preparing same, which comprise from about 100 parts by weight of an elastomeric polymer selected from the group consisting of butyl rubber and ethylene-propylene terpolymers such as EPDM, and from about 1 to 100 parts, and preferably 3 to 20 parts, by weight of a rubber-extending oil, about 9 to 20 parts, and preferably 12 to 15 parts, by weight of at least one anionic phosphate ester, about 0.25 to 4.0, e.g., 0.1 to 0.5 parts, preferably 1 to 2 parts, by weight of at least one water-soluble polymeric organic thickener, and from about 0 to 2.0 parts, e.g. 0.1 to 2.0 parts, by weight of an anionic emulsifying agent, about 0 to 2.0 parts, e.g., 0.1 to 2.0 parts, by weight of an anionic dispersing or stabilizing agent, and from about 0 to 1.0 parts, e.g., 0.1 to 1.0 parts, by weight of an antifoaming agent. For purposes of this invention, the term "emulsion" includes emulsions and/or dispersions of the elastomers.

More specifically, this invention relates to a batch or continuous process of preparing an aqueous latex emulsion or dispersion which comprises forming a solution of an elastomer selected from the group consisting of butyl rubber and an ethylene-propylene-unsaturated monomer terpolymer in an organic solvent, and emulsifying the solution of the elastomer in water in the presence of a rubber-extending oil, and at least one phosphate ester to obtain an elastomeric emulsion, and then subsequently removing substantially all of the organic solvent from the emulsion and thoroughly mixing, i.e., thickening, the latex with an effective amount of at least one polymeric thickener to obtain a latex emulsion having the viscosity needed for the particular end use, e.g., preparing gaskets and the like.

In accordance with this invention, the solution of the elastomeric polymers, i.e., the butyl rubber of EPDM are solubilized in the organic solvent, preferably with a comparatively large amount of an anionic phosphate ester and the rubber-extending oil. This solution or cement comprising the elastomers dissolved in the solvent with the oil and phosphate ester is homogenized with an aqueous mixture comprising additional amounts of the phosphate ester and stabilizing agent, dispersants, surfactants, emulsifying agents, and antifoam agents. The dispersion or emulsification of the soap-makeup and the cement-makeup as shown in the Examples takes place in a homogenizer until the emulsification is completed. Subsequently, the homogenized latex or emulsion is stripped of substantially all of the organic solvent, e.g., by heating under vacuum, and then thoroughly mixed or thickened with effective amounts of at least one water-soluble polymeric thickener to obtain a latex emulsion of desired viscosity.

Specifically, referring to FIG. 1, the schematic drawing illustrates a specific example wherein the soap solution (Example 1) comprising water and a minor proportion of the phosphate ester with the stabilizer, surfactant and anti-foam agent are blended in a mixer 1 containing a stirrer 5. The soap solution is carried

by means of line 3 by a pump 6 through a meter 8 to the homogenizer 10. At the same time, the elastomeric cement (Example 1) comprising the butyl rubber of EPDM (ethylene-propylene-diene monomer) makeup is solubilized in an organic solvent, e.g., toluene, in a mixer 2 with stirrer 4 to form a solution of the elastomer containing a major proportion of the phosphate ester and the rubber-extending oil. The rubber cement is carried by means of line 7 and pump 12 to a meter 14 to the recycle loop 13 and homogenizer 10 wherein the hydrocarbon solution of the elastomer is homogenized with the aqueous soap makeup coming from mixer 1. Pumps 16 and 18 recycle the soap solution and cement through the homogenizer 10 and then carry the homogenized aqueous emulsion or dispersion through line 17 to a stripper 20 which contains a stirrer 22. Here in stripper 20, the homogenized latex is stripped of the organic solvent at temperatures ranging from 40° to 90° C, and more likely at temperatures of about 60° to 70° C under a vacuum of 15 to 30 inches of mercury and then passed through line 19 to a condenser 24 and then through line 21 to a receiver 26. The receiver 26 is vented through a condenser 30 through line 23. The solvent, i.e., toluene, is them pumped to a container by means of a pump 28 through line 29. The aqueous elastomeric emulsion or dispersion, substantially free of organic solvent, is then removed from the stripper 20, thickened with an effective amount of the water-soluble thickener, e.g., acrylic polymer, and carried to the drums through line 15. The thickener is added to the emulsion in amounts ranging up to about four parts by weight, e.g., 1 to 2 parts per 100 parts of elastomer, subsequent to stripping off the solvent.

The amount of water used in preparing the soap solution containing minor amounts of the phosphate ester and the dispersants, emulsifying agents, surfactants, and anti-foam agents, is less than the amount of organic solvent used in forming the solution of the elastomer with the rubber-extending oil and the phosphate esters. The water-to-solvent or soap-to-cement ratio is approximately 0.3 to 0.9 parts by weight of water-soap solution for every 1.0 part by weight of the solvent-cement solution.

The butyl rubbers useful for purposes of this invention are commerically available, and comprise copolymers of isobutylene or another isoolefin of similar molecular weight, with a diolefin such as isoprene or butadiene wherein the major component is isobutylene and the minor component is either the isoprene or butadiene. The butyl rubbers are prepared by copolymerizing the monomers at low temperatures, i.e., temperatures of -40° to -164°, in the presence of a Friedl-Crafts catalyst. More specifically, for example, approximately 1 to 15 parts by weight of isoprene and 99 to 85 parts by weight of isobutylene are copolymerized in the presence of a catalyst. The polymerization may be stopped at any time after the degree of polymerization has been obtained through the introduction of an inactivator such as a lower molecular weight alcohol, water, or an amine. The polymer is then dried by passing through a tunnel dryer or a mill. For purposes of this invention, the butyl rubbers as defined herein generally have average molecular weights ranging from about 100,000 to 400,000, and more likely in the range of about 200,000 to 250,000. These butyl rubbers can be prepared, for example, by the methods taught in U.S. Patent 2,356,128, see Industrial and Engineering Chemistry, Vol. 32, pp. 1283 et seq.

The elastomeric polymers for purposes of this invention include the elastomeric terpolymers containing ethylene and propylene in the backbone and a diene monomer as the cross linking monomer. More specifically, the EPDM terpolymers are defined in ASTM-D 1418-64 and a method of producing these terpolymers is disclosed, for example, in U.S. Patent No. 3,280,082. The preferred ethylene-propylene-diene terpolymers generally comprise from about 45 to 80 weight percent of ethylene, 2 to 10 weight percent of the diene monomer, with the balance of the terpolymer comprising propylene. The diene monomers are preferably non-conjugated dienes, which includes, for example, hexadiene, dicyclopentadiene, norbornenes, and the like. These terpolymers generally have a Mooney viscosity at 212° F of about 60 and are prepared preferably from a monomer blend having an ethylene content of about 56 weight percent, a propylene content of about 41.4 weight percent, and a non-conjugated diene content of about 2.6 weight percent.

These elastomeric polymers, i.e., solutions of the EPDM polymer or butyl rubber, are solubilized in a solvent and are referred to herein as cements. These cements are characterized as viscous solutions of the butyl rubber or EPDM polymer in a volatile organic solvent. The solvent is present in amounts ranging from about 400 to 2000 parts by weight per 100 parts by weight of the elastomer, i.e., EPDM, and preferably in amounts ranging from 500 to 1000 parts by weight. Preferably, the solvent is an aromatic hydrocarbon such as toluene. However, various organic solvents, including the aliphatic and aromatic hydrocarbons or the chlorinated hydrocarbons, may be used as solvents in forming solutions of the elastomers. The organic solvent may include, for example, hexane, heptane, cyclohexane, dichloroethane, carbon tetrachloride, toluene, benzene, xylene, and combinations thereof. Of all of these solvents, however, toluene is particularly preferred, since it is desirable that the solvent have a boiling point not greater than about 100° C and a boiling point less than the boiling point of water. It is important to utilize organic solvents having boiling points less than that of water or an azeotrope temperature below the boiling point of water in order to strip the hydrocarbon from the emulsion.

In preparing the aqueous dispersions or emulsions, the solution of the elastomer is combined with the water which contains effective amounts of surfactant, dispersant, and emulsifying agent. Generally, various known emulsifying agents are effective to obtain stable oil and water emulsions. The emulsifying agents required for this invention, however, include the anionic compounds, such as the alkali metal salts of sulfated ethoxylated alkanols and the alkyl phenols wherein the alkyl groups have from about 8 to 12 carbon atoms and the phenols and alkanols have from 1 to 10 mols of ethylene oxide per mol. Particularly useful as anionic emulsifying agents for purposes of this invention are the alkali metal salts, such as the sodium salts of sulfate derivatives of adducts of ethylene oxide and nonylphenol. Other anionic surfactants include the salts of the $C_8$ - $C_{18}$ alkyl sulfonates, such as the sodium alkyl sulfonates, sulfonated fatty ester salts, and other anionic surfactants wherein the solubilizing group includes the sulfonate group, i.e., the acid or salt group. Still other anionic surfactants include the alkali metal salts and ammonia salts of fatty acids containing from about 8 to 24 carbon atoms. The fatty acids include the coconut oil fatty acids, soy bean oil fatty acids, tall oil fatty acids, and the like.

After the latex emulsion is obtained by thoroughly mixing the aqueous soap solution and the hydrocarbon solution, i.e., cement, the mixture is homogenized to reduce the particle size and to thoroughly disperse the particles. The emulsion is then stripped of the solvent, e.g., under a vacuum, to obtain an aqueous latex emulsion and/or dispersion containing anywhere from about 10 to 30 percent by weight of solids, i.e., the elastomers.

The use of oils for the extension of rubber is well known in the industry, and for purposes of this invention are utilized in amounts ranging from about 1 to 100 parts by weight, and preferably from about 3 to 20 parts by weight of the oil per 100 parts by weight of the rubber, i.e., EPDM or butyl rubber. More specifically, these oils are readily available as extender oils under various trade names, such as Circosol process oils, which have viscosities at 100° F ranging from about 100 to 2400 SUS. Other oils include the Sunthene oils which is a series of naphthenic oils particularly useful in processing polymers with low unsaturation such as the EPDM rubbers. In addition to the naphthenic oils, other available process oils include the paraffinic and aromatic oils which are available under the trade names Sunpar and Sundex.

Particularly useful as extender oils for purposes of this invention are the paraffinic oils known as the Sunpar grades having viscosities at 100° F ranging from as low as 600 SUS to as high as 2500 SUS. In addition, other commercially available extender oils include the naphthenic oils available from the Prutex Oil Company, known as PRUTEX 1201. These naphthenic extender oils have viscosities at 100° F, ranging from 1000 SUS to 1350 SUS, as determined by ASTM test methods. Still other oils are supplied by Arco, identified as a Pale Oil 1200, which has a viscosity at 100° F of 1300 SUS. The use of these extender oils with EPDM cements improves the yield of polymer by preventing formation of coagulum during the stripping operation.

In addition, it was found that for purposes of this invention the use of a particular class of anionic phosphate esters as the surfactant not only imparts increased stability to the latex emulsion, but also provides a degree of corrosion inhibition to the final product. These latexes are particularly useful, therefore, in the manufacture of fiber gaskets and the like for the auto industry. Moreover, these anionic phosphate esters provide excellent emulsifying, lubricity, and antistatic characteristics for the latex composition, and maintain their emulsifying and surfactant properties over a broad pH range. The preferred anionic phosphate esters for this invention are used in amounts ranging from about 9 to 20, and preferably from 12 to 15 parts by weight, and are characterized by the following formulae:

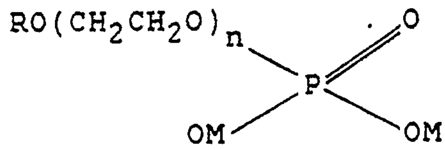

Monoester

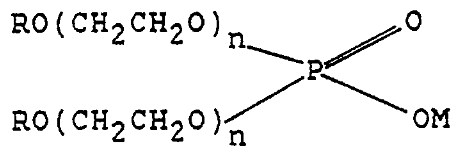

Diester

wherein R is an alkyl or aryl radical, n is the average number of mols of ethylene oxide reacted with 1 mol of hydrophobe, and M is hydrogen, sodium, or some other alkali metal. These anionic phosphate esters are available commercially under the trademarks GAFAC RM-510 and RE-410, which are identified in Gafac Bulletin 7543-194 as alkylene oxide adducts by the GAF Corporation.

.In accordance with this invention, the latex emulsions or dispersions are prepared by emulsifying the EPDM or butyl rubber cement to provide oil-in-water emulsions. The removal of the solvent is a rigorous process in that it is not always possible to form an emulsion which is sufficiently stable after removing the solvent. Since the emulsions must be stable over extended periods under various conditions of temperature, etc., in order to prepare stabilized emulsions, the use of certain emulsifying agents and/or dispersants may be necessary. These agents are known to affect the physical and chemical characteristics of the latex, depending on the nature of the emulsifiers or dispersants used in the emulsification process.

In accordance with this invention, the emulsification process is preferably carried out in the presence of 0 to 2.0 parts or 0.1 to 2.0 parts by weight of an anionic emulsifying agent and 0 to 2.0 parts or 0.1 to 2.0 parts by weight of an anionic dispersant or stabilizer. The use of a combination of the anionic emulsifying agent and the anionic dispersant as described herein results in an aqueous latex emulsion having improved physical and chemical characteristics due to the composition of the emulsifiers, dispersants, and surfactants employed in the emulsification. A preferred class of anionic emulsifiers includes the disulfonated alkylated diphenyl oxide compounds which are generally available commercially as DOWFAX from the Dow Chemical Company. The chemical structure of the DOWFAX emulsifying agents has two sulfonate groups rather than one in the molecule, which gives good performance in emulsification. The disulfonated alkylated diphenyl oxide emulsifying agents are available wherein the chain length of the alkyl constituent varies between $C_5$ through $C_{12}$.

In addition to these disulfonated emulsifying agents, the emulsification may take place in the presence of one or more anionic sulfonate dispersants, and particularly the alkali metal or ammonia salts of an arylsulfonic acid such as naphthalene sulfonic acid. These dispersants are readily available as LOMAR PWA. The salts of the alkyl and/or arylsulfonic acids, such as the ammonium salts of naphthalene sulfonic acid, together with the anionic surfactants and emulsifying agents, are needed in preparing the emulsified latexes of this invention. However, in addition to the salts of the sulfonic acids and the disulfonated diphenyl oxide emulsifiers, there are various other anionic emulsifying agents generally known to be useful for the emulsification of elastomers. It should be understood that the anionic disulfonated diphenyl oxides and sulfonates described herein are the preferred emulsifiers and dispersants for purposes of this invention.

As disclosed herein, the elastomeric polymers are dissolved in the organic solvent and emulsified with approximately an equal amount of water in the presence of one or more of the anionic emulsifying agents, dispersants, and the phosphate esters. After the emulsification or dispersion is complete, the solvent is removed from the enriched latex by stripping, e.g., under heat and vacuum, until essentially there is no solvent remaining. The latex is then thickened by the addition of a thickening amount of a water-soluble polymeric thickener, i.e, an amount ranging from about 0.25 to 4.0, and preferably in an amount ranging from about 1.0 to 2.0 parts or 0.1 to 0.5 parts by weight of the polymeric thickener per 100 parts by weight

of the butyl rubber or EPDM. According to this invention, the polymeric thickeners not only retard excessive creaming, but the presence of the thickener extends the shelf-life and helps to redisperse the elastomers in the event the latex creams to the consistency of a paste. The polymeric thickeners are characterized as substantially water-soluble, hydrophilic polymers selected from the group consisting of polyacrylics, polyvinyl alcohols, cellulosics, polyvinyl pyrrolidones, maleic acid/vinyl ether copolymers, natural gums such as gum arabic, karay gum, guar gum, etc., starches, and casein.

Examples of the preferred acrylic thickeners include the sodium polyacrylates, available commercially as ACRYSOL GS or Alcogum AN-10. These polyacrylic acid salts are good thickeners for latex emulsions in terms of stabilizing the emulsion when a change of viscosity is required. Moreover, the salts of the polyacrylic acids are stable and will not hydrolyze, and therefore maintain, a constant viscosity over a longer period of time at elevated temperatures.

These polyacrylics may have molecular weights greater than about 2,000. Generally, polymers having average number molecular weights of about 10,000 to 500,000 or higher may be used as thickeners. The polyacrylics are used in amounts less than about 4 parts per 100 parts of elastomer in the emulsion. Usually, no more than about 2.0 weight parts per 100 weight parts of latex polymer is required. Good results have been obtained when the concentration of thickeners ranges from about 0.1-0.5 part. Other polymeric acrylics may be used so long as they are water-soluble, including, for example, polymethacrylic acid, polyacrylamides, and the like. Copolymers of the acrylic acids and salts also may be used so long as the copolymers are substantially water-soluble.

While the polyacrylics and the alkali metal water-soluble salts thereof, e.g., sodium polyacrylate, are some of the preferred anionic, water-soluble, hydrophilic thickeners for use in this invention, improved results have been obtained also with other water-soluble thickeners such as cellulosics. Thus, it was found that the viscosity of the latex emulsions obtained in accordance with this invention can be controlled or adjusted by the addition of thickening amounts of a substantially water-soluble polymeric thickener selected from the group consisting of the polyacrylics, cellulosics, polyvinyl alcohols, polyvinyl pyrrolidones, copolymers of maleic acid and vinyl ethers, and some of the natural thickeners, such as natural gums, i.e., guar gum, karaya gum, gum arabic, etc., or the starches, casein, and the like.

Of the cellulosic thickeners, hydroxyethyl cellulose is preferred and is available commercially under the trade name "Cellosize." Cellosize is a nonionic thickener available in a range of viscosity grades. Other cellulosic thickeners include methyl celluloses, available commercially as Methocel. The carboxymethyl celluloses, such as sodium carboxymethyl cellulose, is available commercially from E. I. Du Pont de Nemours & Co. The polyvinyl alcohol thickeners are available from Du Pont in various grades from the low molecular weight to the very high molecular weight polymers, e.g., ELVANOL grades 73-125 as the high molecular weights and ELVANOL 70-05 as the lower molecular weight polymers.

Another class of water-soluble polymers useful for thickening the emulsions of this invention include copolymers derived from vinyl ethers and maleic acid or anhydride. These vinyl ether-maleic acid or anhydride polymers are available commercially in various molecular weights under the trade name "Gantrez AN-119, AN-179, AN-139, etc. In addition to the cellulosics, polyvinyl alcohols, polyacrylics, and the natural thickeners, another class of thickeners includes the water-soluble polyvinyl pyrrolidones, available commercially from the GAF Corporation.

The following examples illustrate the compositions and process of emulsifying elastomers in the presence of the phosphate ester and rubber-extending oils in accordance with this invention.

## EXAMPLE I

| Cement Makeup | |
|---|---|
| | Parts by Weight |
| Polymer EPDM Rubber (EPSYN 4906) | 100.00 |
| TOLUENE | 900.00 |
| Phosphate ester (GAFAC RE-410) | 9.00 |
| Oil Extender (PRUTEX 1201) | 10.00 |
| **Soap Makeup** | |
| | Parts by Weight |
| Water | 800.00 |
| Phosphate ester (GAFAC RE-410) | 1.00 |
| Phosphate ester (GAFAC RM-510) | 3.00 |
| Arylsulfonic acid salt (LOMAR PWA) | 1.00 |
| Defoamer (NOPCO DD4) | 0.85 |
| Disulfonated alkyl diphenyl oxide (DOWFAX 2A1) | 0.30 |
| Water | 150.00 |
| KOH | 0.40 |
| C/W ratio = 1.25<br>Cement T.S% = 10%<br>Strip Temp. = 90°C | |

EXAMPLE 2

| Cement Makeup | |
|---|---|
| | Parts by Weight |
| Polymer EPDM (EPSYN 2308) | 100.00 |
| HEXANE | 733.33 |
| Phosphate ester (GAFAC RE-410) | 9.00 |
| Oil Extender (PRUTEX 1201) | 10.00 |
| **Soap Makeup** | |
| | Parts by Weight |
| Water | 666.67 |
| Phosphate ester (GAFAC RE-410) | 1.00 |
| Phosphate ester (GAFAC RM-510) | 3.00 |
| Arylsulfonic acid salt (LOMAR PWA) | 1.00 |
| Defoamer (NOPCO DD4) | 0.85 |
| Disulfonated alkyldiphenyl oxide (DOWFAX 2A1) | 0.30 |
| Water | 150.00 |
| KOH | 0.40 |
| C/W ratio = 1.25<br>Cement T.S% = 12%<br>Strip Temp. = 65°C | |

## EXAMPLE 3

| Cement Makeup | |
|---|---|
| | Parts by Weight |
| Polymer EPDM Rubber (EPSYN 4906) | 100.00 |
| TOLUENE | 900.00 |
| Phosphate ester (GAFAC RE-410) | 9.00 |
| Oil Extender (PRUTEX 1201) | 3.00 |
| **Soap Makeup** | |
| | Parts by Weight |
| Water | 800.00 |
| Phosphate ester (GAFAC RE-410) | 1.00 |
| Phosphate ester (GAFAC RM-510) | 3.00 |
| Arylsulfonic acid salt (LOMAR PWA) | 1.00 |
| Defoamer (NOPCO DD4) | 0.85 |
| Disulfonated alkyl diphenyl oxide (DOWFAX 2A1) | 0.30 |
| Water (stripper water) | 150.00 |
| KOH | 0.40 |
| C/W ratio = 1.25<br>Cement T.S% = 10%<br>Strip Temp. = 90 °C | |

## EXAMPLE 4

| Cement Makeup | |
|---|---|
| | Parts by Weight |
| Polymer EPDM Rubber (EPSYN 4906) | 100.00 |
| TOLUENE | 900.00 |
| Phosphate ester (GAFAC RE-410) | 9.00 |
| Oil Extender (PRUTEX 1201) | 3.00 |
| **Soap Makeup** | |
| | Parts by Weight |
| Water | 800.00 |
| Sodium lauryl sulfate | 1.00 |
| Arylsulfonic acid salt (LOMAR PWA) | 1.00 |
| Defoamer (NOPCO DD4) | 0.85 |
| Water (stripper water) | 150.00 |
| KOH | 0.40 |
| C/W ratio = 1.25 | |
| Cement T.S% = 10% | |
| Strip Temp. = 90° C | |

EXAMPLE 5

| Cement Makeup | |
|---|---|
| | Parts by Weight |
| Polymer EPDM Rubber (EPSYN 4906) | 100.00 |
| TOLUENE | 900.00 |
| Phosphate ester (GAFAC RE-410) (alkylene oxide adduct) | 9.00 |
| Oil Extender (SUN PAR 2280) | 3.00 |
| **Soap Makeup** | |
| | Parts by Weight |
| Water | 871.43 |
| Phosphate ester (GAFAC RE-410) | 1.00 |
| Phosphate ester (GAFAC RM-510 | 3.00 |
| Arylsulfonic acid salt (LOMAR PWA) | 1.00 |
| Defoamer (NOPCO DD4) | 0.85 |
| Disulfonated alkyldiphenyl oxide (DOWFAX 2A1) | 0.30 |
| Water | 410.00 |
| KOH | 0.40 |
| C/W ratio = 1.75 | |
| Cement T.S% = 10% | |

EXAMPLE 6

An emulsion prepared in accordance with Example 5 was subsequently stripped at temperatures ranging from about 40° to about 90°C over a period of several hours under a vacuum until substantially all of the solvent was removed and then approximately 0.75 parts by weight of a sodium salt of polyacrylic acid (Acrysol-GS) per hundred parts by weight of the EPDM rubber was added to thicken the emulsion and the pH was adjusted to about 10 with the addition of KOH.

## EXAMPLE 7

| Cement Makeup | |
|---|---|
| | Parts by Weight |
| Polymer EPDM Rubber (EPSYN 4906) | 100.00 |
| TOLUENE | 900.00 |
| Phosphate ester (GAFAC RE-410) (alkylene oxide adduct) | 9.00 |
| Oil Extender (SUN PAR 2280) | 3.00 |
| **Soap Makeup** | |
| | Parts by Weight |
| Water | 871.43 |
| Phosphate ester (GAFAC RE-410) | 1.00 |
| Phosphate ester (GAFAC RM-510) | 3.00 |
| Arylsulfonic acid salt (LOMAR PWA) | 1.00 |
| Defoamer (NOPCO DD4) | 0.85 |
| Disulfonated alkyldiphenyl oxide (DOWFAX 2A1) | 0.30 |
| Water | 410.00 |
| KOH | 0.40 |
| C/W ratio = 1.75<br>Cement T.S% = 10% | |

## EXAMPLE 8

The emulsion prepared in accordance with Example 7 was stripped of solvent at temperatures ranging from about 60 to 70°C over a period of several hours under a vacuum until substantially all of the solvent was removed from the emulsion and then approximately 2.0 parts by weight of hydroxyethyl cellulose (Cellosize HEC/QP -09-L) per 100 parts by weight of the EPDM rubber was added to thicken the emulsion, and the pH was adjusted to about 10 with KOH.

The data provided by the examples illustrate that the elastomers, such as EPDM, can be emulsified in water to provide stable latex emulsions by using anionic phosphate esters as the surfactant in combination with the extender oil and preferably with an anionic emulsifying agent and an anionic dispersant.

In preparing the emulsion, it is obvious that various defoaming agents can be employed which generally include compounds known to inhibit foaming in aqueous system. However, while there are many antifoam agents, for purposes of this invention, the silicone-type are not desirable. The preferred antifoam agents that may be used for this invention to increase the rate of solvent stripping and prevent foaming include the oxyalkylated alcohols and phenols such as the polyoxyethylated octyl, nonyl, and phenol compounds having from 5 to 15 ethylene oxide groups. In addition, other known antifoam agents include the fatty acids and esters and various commercial mixtures, which may be used to inhibit foam generated during evaporation or removal of solvent. A class of particularly useful antifoam agents for purposes of this invention are commercially available under the trade name NOPCO DD4.

Depending on the ultimate use of the latex emulsions or dispersions, the composition may include

various other additives, including well known fillers such as clay, talc, mica, carbon black, organic fillers and the like. The latex composition may be used in the preparation of coating compositions, laminates for paper, or as a binder for various fibrous materials and as a coating for protective garments.

While this invention has been described with respect to a number of specific embodiments, it is obvious that there are other variations and modifications which can be made without departing from the spirit and scope of the invention as particularly set forth in the appended claims.

## Claims

1. In a process for preparing latex emulsions and dispersions from organic solutions of elastomers selected from the group consisting of butyl rubbers and polymers derived from ethylene and propylene; the improvement which comprises emulsifying an organic solution of said elastomers with water in the presence of an effective amount of a rubber-extending oil and a phosphate ester, removing the organic solvent from the emulsion and thickening the emulsion with a substantially water-soluble polymeric thickener selected from the group consisting of polyacrylics, cellulosics, polyvinyl alcohol, polyvinyl pyrrolidone, polymers of maleic acid or anhydride and vinyl ethers, natural gums, starches and casein.

2. The process of Claim 1 wherein the thickener is a polyacrylic.

3. The process of Claim 1 wherein the thickener is a cellulosic polymer.

4. The process of Claim 1 wherein the phosphate ester is present in an amount ranging from about 9 to 20 parts by weight per 100 parts by weight of the elastomer and the rubber- extending oil is present in an amount ranging from about 1.0 to 100 parts by weight of the elastomer.

5. The process of claim 1 wherein water is present in an amount ranging from about 0.03 to 0.9 parts by weight for every part by weight of organic solvent.

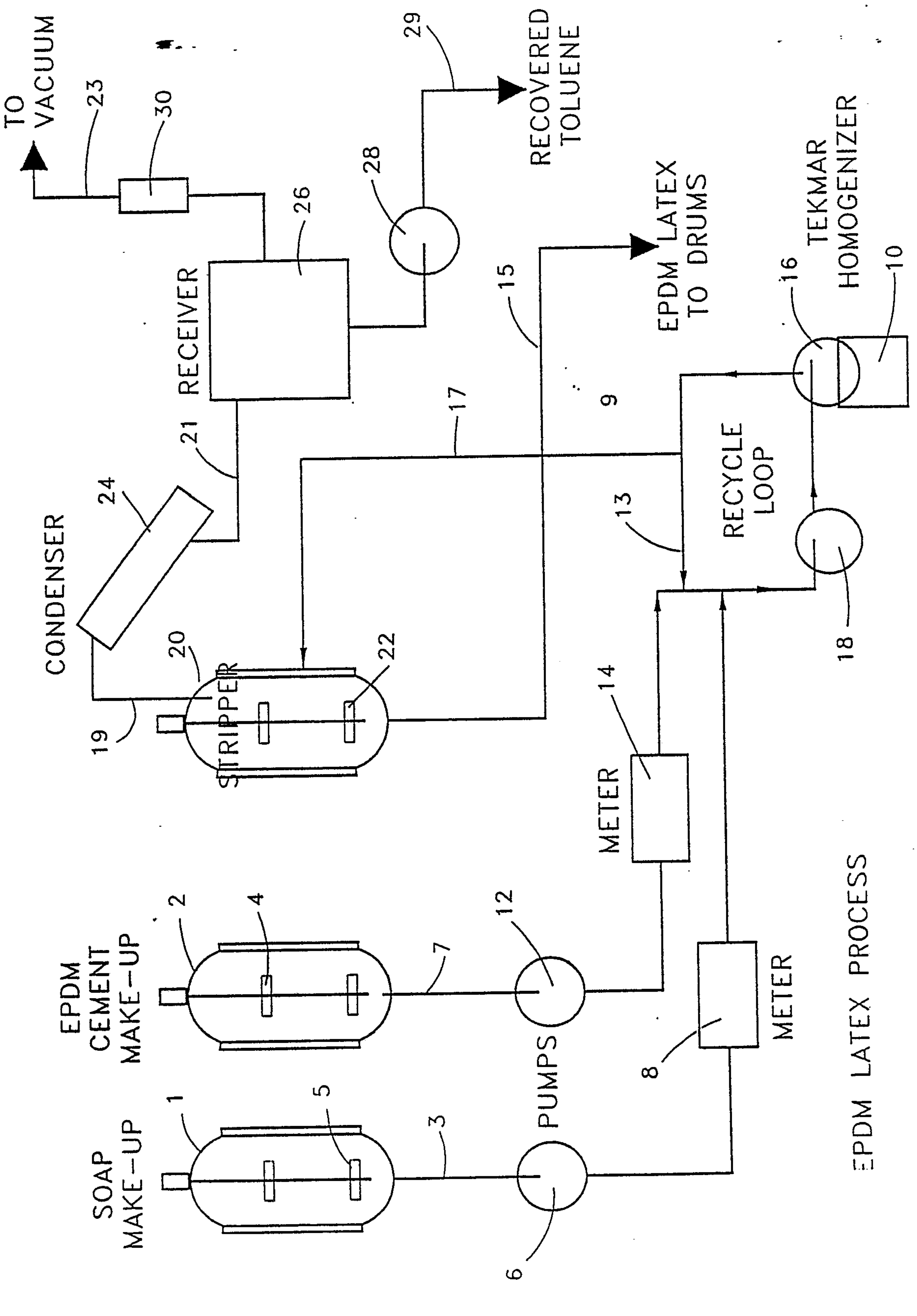


EPDM LATEX PROCESS